# FASCICULE DE BREVET EUROPEEN

(11) **EP 2 153 329 B1**
(45) Date de publication et mention de la délivrance du brevet: **14.02.2018**
(21) Numéro de dépôt: 08805894.6
(22) Date de dépôt: 29.05.2008
(51) Int. Cl.: G06F 11/30, G05B 23/02, G05B 15/02

(54) **PROCÉDÉ ET DISPOSITIF DE GESTION, DE TRAITEMENT ET DE CONTRÔLE DE PARAMÈTRES UTILISÉS À BORD D'AÉRONEFS**
VERFAHREN UND VORRICHTUNG ZUR VERWALTUNG, VERARBEITUNG UND ÜBERWACHUNG VON PARAMETERN AN BORD EINES FLUGZEUGES
METHOD AND DEVICE FOR MANAGING, PROCESSING AND MONITORING PARAMETERS USED ON BOARD AIRCRAFT

(30) Priorité: 05.06.2007 FR 0704020
(43) Date de publication de la demande: 17.02.2010
(73) Titulaire: AIRBUS OPERATIONS, 31060 Toulouse (FR)
(72) Inventeur: JOSEPH, Olivier, F-31300 Toulouse (FR)
(74) Mandataire: Santarelli
(86) Numéro de dépôt international: PCT/FR2008/050951
(87) Numéro de publication internationale: WO 2008/152315

(56) Documents cités:
- EP-A- 1 280 316
- US-A- 5 161 158

## Description

La présente invention concerne la gestion des données caractéristiques des aéronefs et plus particulièrement un procédé et un dispositif de gestion, de traitement et de contrôle des paramètres utilisés à bord d'aéronefs, communément appelés paramètres avioniques ou paramètres de vol.

Les équipements électroniques et les systèmes avioniques embarqués actuels sont de plus en plus complexes et de plus en plus performants, intégrant de nombreuses fonctionnalités avancées et multipliant les interconnexions entre les systèmes. Par conséquent, le volume d'échange d'informations augmente.

Ces systèmes avioniques embarqués hautement intégrés, basés sur des composants matériels, des composants logiciels et un réseau de communication partagé, se multiplient et se complexifient au rythme d'une évolution technologique permanente, ouvrant non seulement de nouvelles perspectives pour les avionneurs mais occasionnant aussi de nouvelles contraintes. L'avènement de ces nouvelles technologies, de ces nouveaux concepts et de ces nouveaux systèmes avioniques nécessitent par conséquent une vigilance accrue et la mise en oeuvre de méthodes et de moyens d'ingénieries efficaces, impliquant l'utilisation d'outils appropriés et optimisés afin de maîtriser la complexité de ces systèmes, leur développement et leur exploitation.

Dans ce contexte de haute technicité et de complexité croissante, les calculateurs ou logiciels d'applications embarqués tels que les systèmes de navigation, de pilotage, de gestion de vol, de communication, de maintenance, d'enregistrement et de commande et d'affichage (cockpit et/ou cabine) ainsi que les systèmes au sol tels que les outils d'analyse de vols, de programmation, d'enregistrement et de calculs utilisent un nombre croissant de paramètres avioniques. La quantité d'information nécessaire à traiter ne cesse d'augmenter, non seulement en volume mais aussi en forme, reflétant cette complexité grandissante et par la même la nécessité d'en optimiser la gestion et le contrôle, de manière sûre et efficace.

Il est également nécessaire de s'adapter à ce nouveau contexte opérationnel et économique où l'accès rapide à l'information est essentiel et où les besoins de qualité, de fiabilité, de confidentialité et de sécurité sont des éléments prépondérants à bord des aéronefs.

Les informations relatives aux paramètres avioniques sont souvent essentielles, au même titre que les traitements informatiques effectués sur les données correspondantes, pour la sécurité des aéronefs et l'efficacité opérationnelle. Par exemple, les informations relatives aux paramètres de gestion de vol, aux paramètres des moteurs, aux paramètres de performance, aux paramètres de maintenance, et aux paramètres d'enregistrement réglementaire sont généralement considérées comme essentielles.

Ces informations sont utilisées par un grand nombre d'utilisateurs, dans une multitude de domaine ayant trait à l'industrie aéronautique et au transport aérien. Les paramètres avioniques et les informations qui s'y rattachent sont indispensables tout au long du cycle de vie de l'aéronef, tant du point de vue des constructeurs d'aéronefs pour les étapes significatives de développement des systèmes, notamment durant les phases de spécification et de conception, d'intégration et de validation et pour les activités de maintenance et de support que du point de vue des opérateurs dans le cadre de leurs activités d'exploitation des aéronefs.

Malgré l'importance des informations relatives aux paramètres avioniques, ces dernières ne sont pas facilement ni directement accessibles aux ingénieurs travaillant sur ces aéronefs ou à toute autre personne ayant besoin de ces informations.

Par ailleurs, l'utilisation de nouvelles technologies, l'introduction d'architecture de systèmes hautement intégrés basé sur un réseau partagé qui induit des échanges de données importants et fréquents ainsi que de logiciels pouvant être programmés par les utilisateurs font également apparaître de nouvelles menaces sur l'intégrité des systèmes et la sécurité des aéronefs. Il est ainsi nécessaire de mettre en oeuvre des moyens ou mécanismes appropriés permettant de détecter, d'isoler, d'éliminer ou de réduire les risques d'intrusions et d'infections et de garantir la confidentialité des informations échangées. EP1280316 divulgue un dispositif de gestion d'un avion.

L'invention s'inscrit dans ce contexte et permet de résoudre au moins un des problèmes exposés précédemment.

L'invention a ainsi pour objet un procédé de gestion d'au moins une caractéristique d'au moins un paramètre utilisé à bord d'un véhicule aérodynamique, ce procédé comprenant les étapes suivantes,
- recevoir un identifiant dudit au moins un paramètre ;
- recevoir ladite au moins une caractéristique dudit au moins un paramètre ;
- formaliser ladite au moins une caractéristique dudit au moins un paramètre selon un format prédéterminé ; et,
- former un code d'identification dudit au moins un paramètre comprenant ledit identifiant et ladite au moins une caractéristique.

L'invention permet ainsi de standardiser et d'harmoniser l'identification des paramètres de véhicules aérodynamiques. Il permet également de capitaliser les connaissances acquises et d'accéder rapidement à l'information relative aux paramètres avioniques, tout au long du cycle de vie des véhicules aérodynamiques (aide à la conception, à la maintenance, au support, à la programmation pour l'enregistrement, la restitution, l'analyse des données de vols). L'invention permet en outre de faciliter et d'optimiser le partage et la consultation de ces informations.

Avantageusement, le procédé comprend en outre les étapes suivantes,
- réception d'au moins une information complémentaire descriptive dudit au moins un paramètre ; et,
- association de ladite au moins une information complémentaire descriptive audit code d'identification.

Selon un mode de réalisation particulier, ladite au moins une caractéristique dudit au moins un paramètre comprend des informations relatives à la source, à l'enregistrement, à l'affichage ou au niveau de confidentialité des valeurs dudit au moins un paramètre.

L'invention a également pour objet un procédé de traitement d'au moins une valeur d'au moins un paramètre utilisé à bord d'un véhicule aérodynamique, ce procédé comprenant les étapes suivantes,
- réception d'un code d'identification dudit au moins un paramètre, ledit code d'identification étant formé selon le procédé de gestion décrit précédemment ;
- réception de ladite au moins une valeur associée audit au moins un paramètre ;
- vérification des données dudit code d'identification reçu selon des données de référence prédéterminées ; et,
- si les données dudit code d'identification reçu sont vérifiées, traitement de la dite au moins une valeur reçue.

Avantageusement le procédé comprend en outre une étape de transmission d'une information relative audit au moins un paramètre si les données dudit code d'identification reçu ne sont pas vérifiées.

L'invention a aussi pour objet un procédé de contrôle d'au moins un paramètre utilisé à bord d'un véhicule aérodynamique, ce procédé étant caractérisé en ce qu'il comprend les étapes suivantes,
- réception d'au moins une information relative audit au moins un paramètre, ladite information étant transmise par le procédé de traitement d'au moins une valeur dudit au moins un paramètre décrit précédemment ; et,
- génération d'une alerte.

L'invention permet ainsi de contribuer à la sécurité des véhicules aérodynamiques en garantissant l'exactitude des informations et la fourniture de moyens de gestion et de contrôle appropriés,

L'invention a aussi pour objet un dispositif comprenant des moyens adaptés à la mise en oeuvre de chacune des étapes des procédés décrits précédemment ainsi qu'un tel dispositif intégré à un aéronef.

L'invention a également pour objet un programme d'ordinateur comprenant des instructions adaptées à la mise en oeuvre de chacune des étapes des procédés décrits précédemment ainsi qu'un moyen de stockage d'informations, amovible ou non, partiellement ou totalement lisible par un ordinateur ou un microprocesseur comportant des instructions de code d'un programme d'ordinateur pour l'exécution de chacune des étapes des procédés décrits précédemment.

D'autres avantages, buts et caractéristiques de la présente invention ressortent de la description détaillée qui suit, faite à titre d'exemple non limitatif, au regard des dessins annexés dans lesquels :
- la figure 1 montre un exemple d'appareil permettant d'implémenter l'invention ;
- la figure 2, comprenant les figures 2a et 2b, illustre un code d'identification d'un paramètre et une carte d'identification d'un paramètre, respectivement ;
- la figure 3, comprenant les figures 3a, 3b, 3c, 3d, 3e et 3f, présente un exemple d'interface graphique ergonomique utilisée pour consulter ou éditer les informations relatives à un paramètre ;
- la figure 4 illustre un exemple d'interface graphique utilisée pour rechercher, trier ou sélectionner des informations relatives à un paramètre ; et,
- la figure 5 illustre un exemple du dispositif utilisé pour contrôler les données des cartes d'identification des paramètres.

Les paramètres avioniques utilisés à bord des aéronefs peuvent être caractérisés par un ensemble d'informations, basiques ou plus ou moins détaillées et pertinentes, telles que le nom et la description des paramètres, leur plage de valeur opérationnelle, leur résolution, leur précision, leur type ou l'unité de mesure.

Selon l'invention, ces informations sont utilisées et combinées, en particulier avec des indications de confidentialité liées à ces informations, pour former des cartes d'identification de ces paramètres comprenant elles-mêmes un code d'identification. Ces cartes d'identification sont de préférence regroupées dans une base de données centralisée. Une telle base de données peut être consultée par un grand nombre d'utilisateur aux compétences variées, dans différents domaines d'activités, ayant besoin d'accéder à ces informations, de préférence après authentification et vérification des droits d'accès. La base de données peut être accessible par plusieurs utilisateurs simultanément, occasionnellement ou en permanence, c'est-à-dire vingt quatre heures sur vingt quatre et sept jours sur sept.

La carte d'identification d'un paramètre a ainsi pour objet de rassembler autant d'informations pertinentes que possible sur ce paramètre selon un format unique, standard et condensé, utilisable par des personnes de professions et de compétences différentes et par là même, pour des besoins et des usages divers. Parmi les utilisateurs potentiels peuvent se trouver des concepteurs systèmes, des essayeurs, des ingénieurs de la qualité ou du support pour les clients, des spécialistes de la certification ou des enquêtes incident/accident et des opérateurs de maintenance.

Les codes d'identification et les cartes d'identification des paramètres doivent pouvoir être utilisés à des fins diverses et variées, par exemple pour le traitement, l'enregistrement, l'affichage des valeurs de ces paramètres ou la réalisation de la documentation technique (par exemple des documents de développement, des manuels de maintenance ou des manuels de formation), dans le cadre des activités de conception d'aéronefs, de maintenance et de support ou bien encore dans le domaine de l'analyse et de la sécurité des vols.

Les codes d'identification peuvent être utilisés dans un but informatif pour déterminer certaines caractéristiques d'un paramètre et/ou dans un but de surveillance pour contrôler les accès, les flux ou le routage de paramètres au sein des systèmes avioniques et des aéronefs en général. Cette surveillance peut être automatique ou manuelle, par exemple pour contrôler si la présence d'un paramètre dans un système particulier est autorisée ou non, pour filtrer ou rediriger un ou plusieurs paramètres dans le cas d'un fonctionnement dégradé ou lorsqu'un problème particulier se présente, pour tracer des échanges ou autoriser des communications. Les valeurs de ces paramètres étant généralement transmises sur des réseaux dits «ouverts», c'est-à-dire non sécurisés et utilisés pour la transmission d'autres données, les codes d'identification de paramètres permettent d'offrir un moyen pour atteindre un niveau de sécurité suffisant pour contrôler les valeurs des paramètres et leurs transmissions.

Selon l'invention, le format des codes d'identification et des cartes d'identification des paramètres tient compte des évolutions possibles des informations caractéristiques des paramètres, c'est-à-dire des besoins liés à ces paramètres.

Les informations contenues dans une carte d'identification caractérisent le paramètre. Ces informations sont par exemple les informations suivantes,
- des informations standard et d'ordre général sur le paramètre ;
- l'identifiant de l'équipement à l'origine du paramètre (par exemple les calculateurs, les modules ou les applications) ;
- une référence à la famille ou au modèle d'aéronefs concernés par ce paramètre ;
- le chapitre ATA (*Air Transport Association*) concerné correspondant à ce paramètre (l'ATA est un organisme international de normalisation ayant établi une classification par chapitres ATA utilisés pour identifier des parties fonctionnelles d'un aéronef de façon standardisée) ;
- la catégorie du paramètre (par exemple la grandeur et l'unité de mesure utilisée) ;
- des indicateurs d'état,
   ▪ la destination (nombre et désignation des calculateurs recevant et utilisant le paramètre) ;
   ▪ l'état d'enregistrement précisant si le paramètre est enregistré dans l'enregistreur de vol communément appelé « boîte noire » ou DFDR (*Digital Flight Data Recorder*) ;
   ▪ l'état d'affichage indiquant si le paramètre est affiché à destination du pilote dans le cockpit et/ou en cabine à destination des passagers et sur quels écrans ; et,
   ▪ l'état de sécurité indiquant la nature du paramètre selon des critères spécifiques tels que la sensibilité de la donnée ou le caractère confidentiel du paramètre (par exemple des données de navigation ou de positions, des données de performances propres à l'opérateur et à l'aéronef ou des données sensibles de la compagnie) ; et,
- d'autres informations significatives pouvant caractériser le paramètre ou ayant une importance notoire à signaler.

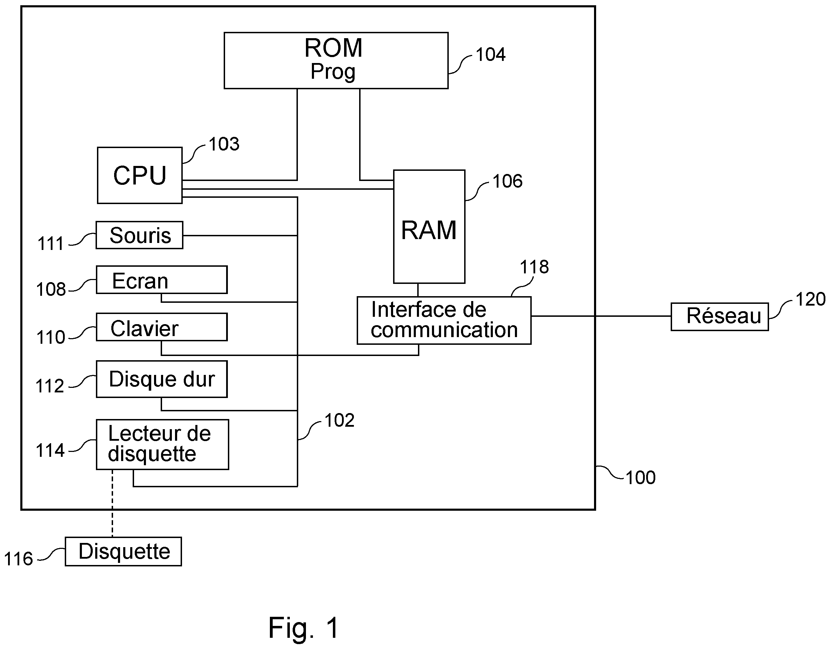

La figure 1 illustre un exemple d'appareil 100 adapté à mettre en oeuvre l'invention, en partie ou dans son intégralité, tel qu'un micro-ordinateur ou une station de travail.

De préférence, l'appareil 100 comporte un bus de communication 102 auquel sont reliées,
- une unité centrale de traitement 103 telle qu'un microprocesseur ;
- une mémoire morte 104 ou *Read Only Memory* (ROM), pouvant comporter un ou plusieurs programmes "Prog" ;
- une mémoire vive 106 ou *Random Access Memory* (RAM), comportant des registres adaptés à mémoriser des variables et des paramètres créés et modifiés au cours de l'exécution des programmes précités ; et
- une interface de communication 118 reliée à un réseau de communication distribué 120, par exemple le réseau Internet, l'interface étant apte à transmettre et à recevoir des données.

L'appareil 100 peut disposer optionnellement de l'un, de plusieurs ou de tous les dispositifs suivants :
- un écran 108 permettant de visualiser des données et/ou de servir d'interface graphique avec l'utilisateur qui pourra interagir avec les programmes selon l'invention, à l'aide d'un clavier 110 ou de tout autre moyen tel qu'un dispositif de pointage, comme par exemple une souris 111 ou un crayon optique, un écran tactile ou une télécommande ;
- un disque dur 112 pouvant comporter des programmes et/ou des données, notamment des données traitées ou à traiter selon l'invention ;
- un lecteur de disquette 114 adapté à recevoir une disquette 116 et à y lire ou à y écrire des données traitées ou à traiter selon l'invention ; et,
- un lecteur de cartes mémoire (non représenté) adapté à y lire ou à y écrire des données, notamment des données traitées ou à traiter selon l'invention.

Le bus de communication permet la communication et l'interopérabilité entre les différents éléments inclus dans l'appareil 100 ou reliés à lui. La représentation du bus n'est pas limitative et, notamment, l'unité centrale est susceptible de communiquer des instructions à tout élément de l'appareil 100, directement ou par l'intermédiaire d'un autre élément de l'appareil 100.

Le code exécutable du ou des programme(s) permettant à l'appareil 100 de mettre en oeuvre les processus selon l'invention, peut être stocké, par exemple, dans le disque dur 112 ou en mémoire morte 104.

Selon une variante, la disquette 116, peut contenir des données ainsi que le code exécutable des programmes précités qui, une fois lu par l'appareil 100, peuvent être stockés dans le disque dur 112.

Alternativement, le code exécutable des programmes peut être reçu par l'intermédiaire du réseau de communication 120, via l'interface 118, pour être stocké de façon identique à celle décrite précédemment.

Les disquettes peuvent être remplacées par tout support d'information tel que, par exemple, un disque compact (CD-ROM) ou une carte mémoire. De manière générale, un moyen de stockage d'information, lisible par un ordinateur ou par un microprocesseur, intégré ou non à l'appareil, éventuellement amovible, est adapté à mémoriser un ou plusieurs programmes dont l'exécution permet la mise en oeuvre du procédé selon l'invention.

De manière plus générale, le ou les programmes pourront être chargés dans un des moyens de stockage de l'appareil 100 avant d'être exécutés.

L'unité centrale 103 contrôle l'exécution des instructions ou portions de code logiciel du ou des programme(s) selon l'invention, instructions qui sont stockées dans le disque dur 112, dans la mémoire morte 104 ou dans les autres éléments de stockage précités. Lors de la mise sous tension, le ou les programmes stockés dans une mémoire non volatile, par exemple le disque dur 112 ou la mémoire morte 104, sont transférés dans la mémoire vive 106 (RAM), qui contient alors le code exécutable du ou des programme(s) selon l'invention, ainsi que des registres pour mémoriser les variables et les paramètres nécessaires à la mise en oeuvre de l'invention.

Il convient de noter que l'appareil comportant le dispositif selon l'invention peut également être un appareil programmé. Les instructions du ou des programme(s) mettant en oeuvre l'invention peuvent, par exemple, être implémentées dans un circuit intégré programmable ou spécifique (*Application-Specific Integrated Circuit,* ASIC).

Une carte d'identification peut ainsi être considérée comme une structure particulière comprenant notamment,
- un code d'identification du paramètre ; et,
- un ensemble d'informations caractéristiques du paramètre.

Les codes d'identification des paramètres sont uniques, chaque paramètre possédant son propre code d'identification permettant de l'identifier de manière unique et sans équivoque. De tels codes peuvent être utilisés comme référence par les utilisateurs, par les applications qui les utilisent ou pour créer des liens entre les cartes d'identification ou entre les paramètres eux-mêmes (en créant par exemple de liens dynamiques entre les paramètres).

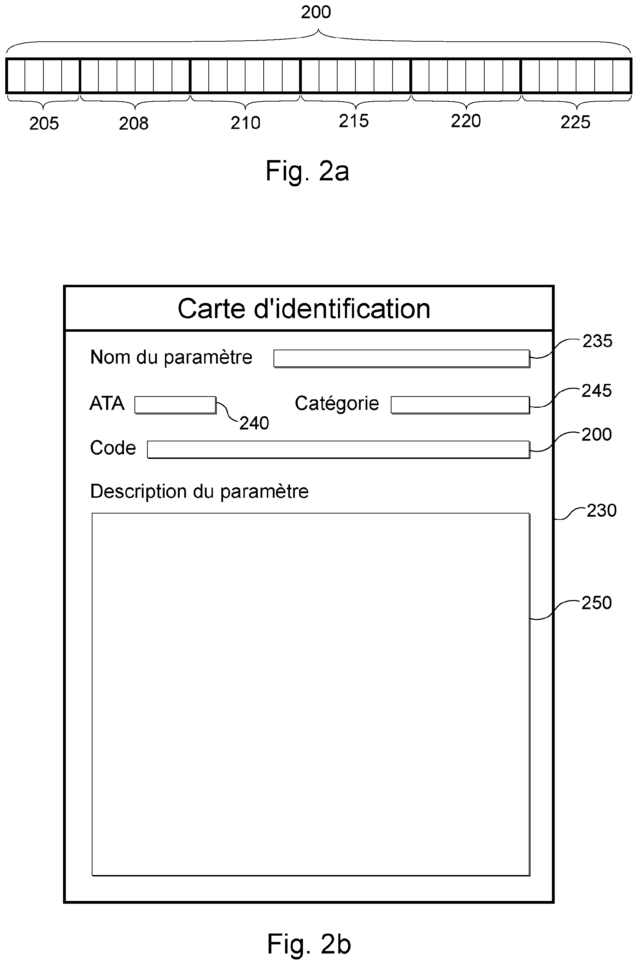

Comme illustré sur la figure 2a, un code d'identification 200 de paramètre est avantageusement composé de plusieurs champs. Ici, le code d'identification 200 d'un paramètre comprend un champ d'identifiant standard 205, un champ d'identifiant détaillé 208, un champ d'enregistrement 210, un champ d'affichage 215, un champ de sécurité 220 et un champ de version 225. Chaque champ a de préférence une longueur fixe et prédéterminée, composé de chiffres et/ou de caractères alphanumériques.

Le champ d'identifiant standard 205 constitue le premier niveau d'identification et a pour objet d'identifier, de façon générale, le paramètre avec un minimum de données (information standard d'identification). Ces données doivent de préférence rester suffisamment génériques pour permettre une certaine standardisation entre les aéronefs.

A titre d'illustration, le premier caractère du champ d'identifiant standard 205 est un « P » (*Parameter*) pour identifier rapidement que les données qui suivent sont relatives à un paramètre avionique. Les deux caractères suivants correspondent au chapitre ATA auquel appartient le paramètre (plus précisément le chapitre ATA auquel appartient le système ou l'équipement émetteur de ce paramètre). Cette information peut être codée sur plus de caractères, par exemple 3 ou 4, et préciser ainsi le système ou l'équipement source à l'origine du paramètre conformément à la description normalisée ATA 100 de l'aéronef en question.

Les trois caractères suivants sont ici utilisés pour coder la catégorie du paramètre sous la forme Cxx où xx correspond au numéro de la catégorie concernée. Par exemple C06 peut être utilisé pour les paramètres de vitesse, C25 pour les paramètres de température, C10 pour les paramètres de masses et C05 pour les paramètres de fréquences. Cette classification par catégorie est de préférence la plus standard possible (construite sur la base de la classification du système internationale d'unité de mesure SI, communément appelé « système métrique ») et adaptée au monde de l'aéronautique.

Ces données peuvent être complétées par d'autres champs complémentaires tels que l'identification de l'équipement ou du système à l'origine du paramètre, le type d'aéronef en question ou la motorisation concernée.

A titre d'exemple, le code P34C06ADIRU1S20RR représente les prémisses du code d'identification d'un paramètre « P », appartenant au chapitre ATA 34 (Navigation), de catégorie C06 (vitesse), dont la source est le calculateur ADIRU1 (*Air Data and Inertial Reference Unit*), se rapportant à un aéronef de type S20 (ici un Airbus A320, Airbus et A320 sont des marques) et équipé d'un moteur de type RR (Rolls-Royce, Rolls-Royce est une marque).

Le champ d'identifiant détaillé 208, constituant le deuxième niveau d'identification, a pour objet d'identifier précisément le paramètre. Ces données doivent être suffisamment détaillées et adaptées afin de garantir l'unicité du paramètre dans sa catégorie.

A titre d'illustration, ce champ peut être constitué par une combinaison ou une codification judicieuse d'informations techniques détaillées relatives au paramètre qui, venant en complément du champ d'identifiant standard 205, permettent de l'identifier de manière unique. Ce champ peut consister par exemple en la combinaison et/ou la codification d'informations inhérentes au paramètre lui-même (tel que le type du paramètre) ou propre à son environnement (en référence au format et/ou au protocole de communication utilisé tel que le numéro de label ARINC429, de bus, de lien virtuel AFDX (*Avionics Full Duplex Network*) ou de port UDP (*User Datagram Protocol*)).

Le champ d'enregistrement 210 permet de fournir des informations relatives à l'état d'enregistrement du paramètre dans l'enregistreur de vol (DFDR).

Selon un mode de réalisation particulier, le premier caractère du champ d'enregistrement est un « R » (*Recording*) permettant d'identifier ce champ. Ce caractère est suivi d'un deuxième caractère binaire, par exemple 0 ou 1, qui indique si ce paramètre est enregistré ou non dans l'enregistreur de vol et d'un troisième caractère binaire, par exemple « M » ou « D » (*Mandatory* et *Documentary*) qui indique s'il s'agit d'un paramètre réglementaire obligatoire dit *Mandatory* (c'est-à-dire un paramètre pour lequel l'enregistrement est issu d'une exigence réglementaire de la part des Autorités compétentes) ou Documentaire dit *Documentary* (c'est-à-dire un paramètre enregistré à titre documentaire, pour lequel l'enregistrement n'est pas spécifiquement exigé par les Autorités mais recommandé parce qu'utile à l'analyse).

Ces données peuvent être complétées par d'autres indications pour inclure le numéro partiel ou complet du paramètre DFDR enregistré (par exemple M01, D20 ou M01a01, D20a03) et préciser notamment si le paramètre est un paramètre filtré ou non filtré, ou bien encore si une mnémonique ou une abréviation particulière lui est éventuellement associé.

A titre d'illustration, le code R1M indique que le paramètre est enregistré dans l'enregistreur de vol (R1) et qu'il s'agit d'un paramètre référencé comme étant obligatoire (M).

Le champ d'affichage 215 indique si le paramètre est affiché ou non dans l'aéronef et le cas échéant sur quel écran il est affiché. Selon un mode de réalisation particulier, le premier caractère du champ d'enregistrement est un « D » (*Display*) permettant d'identifier ce champ. Ce caractère est suivi d'un ou de plusieurs caractères qui indiquent les écrans sur lesquels ce paramètre est affiché ou affichable (par exemple écran de navigation ND (*Navigation Display*), écran de pilotage PFD (*Primary Flight Display*), collimateur tête haute HUD (*Head Up Display*), écran d'alarmes ou terminal OIT/OMT (*Onboard Information Terminal*/ *Onboard Maintenance Terminal*))*.*

Le champ de sécurité 220 sert à préciser si le paramètre est confidentiel ou non et s'il est exporté ou exportable, par exemple vers le sol. Selon un mode de réalisation particulier, le premier caractère du champ d'enregistrement est un « S » (*Security*) permettant d'identifier ce champ. Ce caractère est suivi d'un ou de plusieurs caractères qui indiquent si ce paramètre est confidentiel ou non, s'il peut être enregistré ou non et s'il peut être transmis au sol ou non. Par exemple, des restrictions sont imposées aux paramètres d'essais en vol (EV) et aux paramètres de maintenance. Ce champ peut également comprendre une indication pour préciser le niveau de confidentialité associé.

Le champ de version 225 détermine la version du paramètre. Selon un mode de réalisation particulier, le premier caractère du champ d'enregistrement est un « V » (*Version*) permettant d'identifier ce champ. Ce caractère est suivi d'un ou de plusieurs caractères qui indiquent la version afin de gérer les évolutions.

La figure 2b illustre un exemple de représentation 230 d'une carte d'identification d'un paramètre qui comprend ici le nom 235 du paramètre, le chapitre ATA concerné 240, la catégorie 245, le code d'identification 200 et la description 250. Les informations affichées sur la représentation 230 sont issues du code d'identification du paramètre et des informations caractéristiques du paramètre.

Selon un mode de réalisation particulier, les données de la description 250 sont cryptées de telle sorte qu'elles ne sont accessibles qu'aux titulaires de la clé de décryptage correspondante. Les mécanismes de cryptage et de décryptage utilisés sont avantageusement des mécanismes standard.

La mémorisation des cartes d'identification des paramètres des aéronefs dans une base de données, de préférence une base de données centralisée, permet d'améliorer le partage des informations ainsi que de simplifier et de contrôler l'accès à ces informations. Outre une fonction de protection des données relatives aux paramètres, la base de données des cartes d'identification des paramètres propose avantageusement des fonctions standard de base de données telles que des fonctions de recherche rapide, de tri, de comparaison, de filtrage et d'import/export.

La base de données comprend une interface de saisie et d'édition des informations relatives aux paramètres ainsi qu'une interface standard d'utilisation de fonction d'accès aux données multi-utilisateurs.

En outre, la base de donnée peut s'interfacer avec d'autres bases de données ou outils existants afin d'en optimiser l'utilisation.

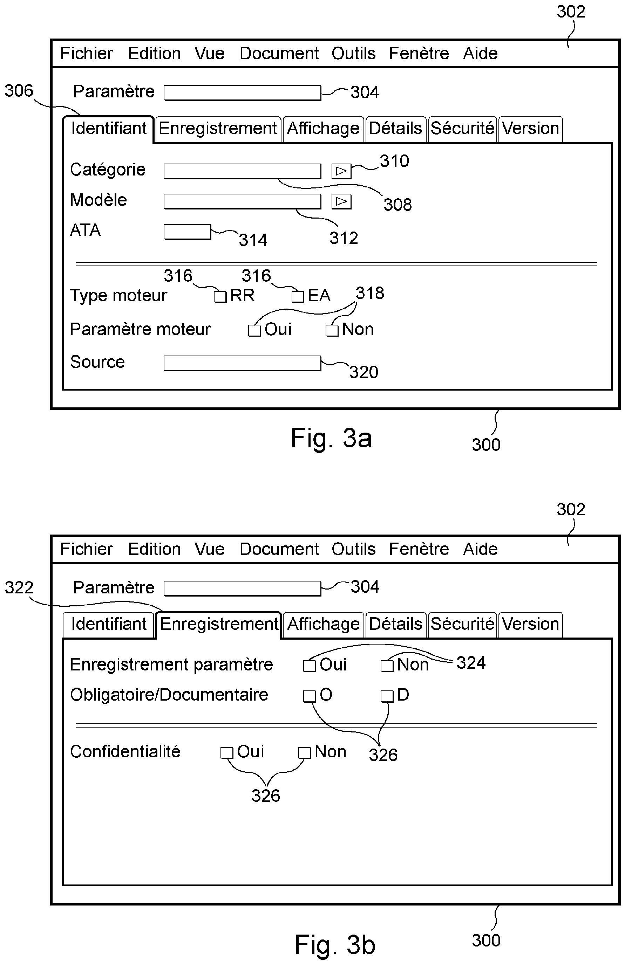

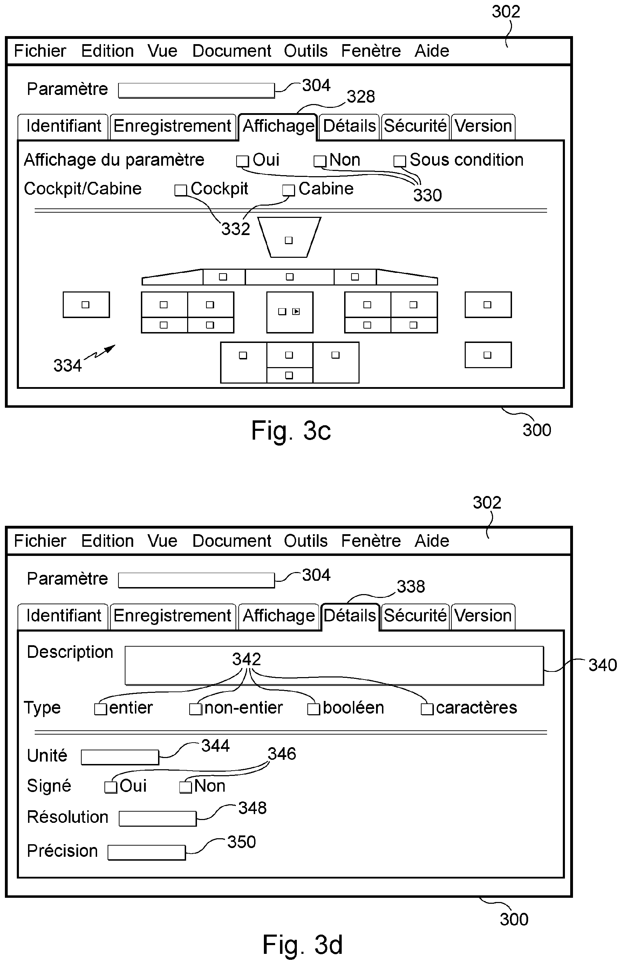

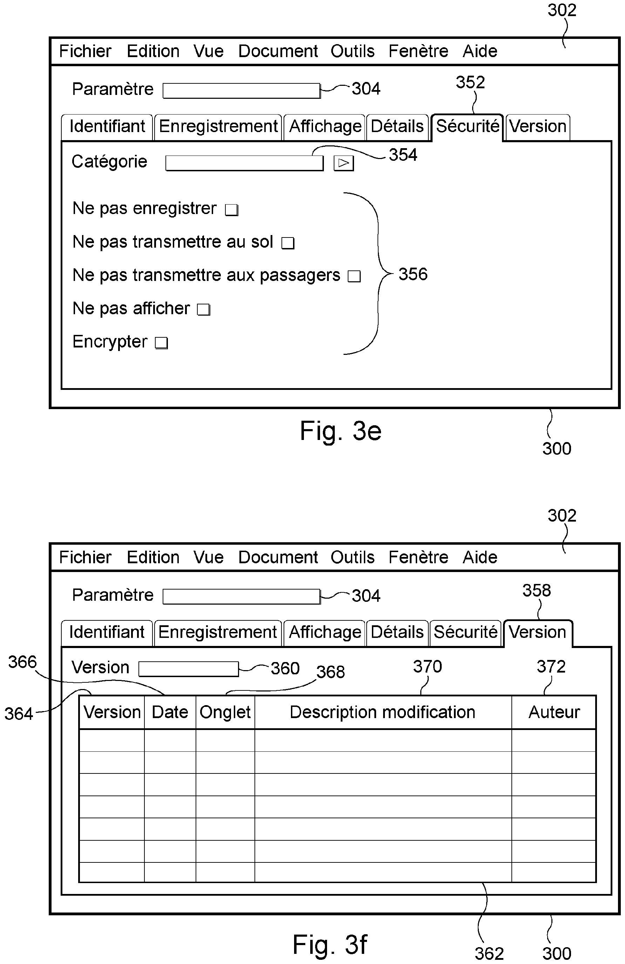

La figure 3, comprenant les figures 3a, 3b, 3c, 3d, 3e et 3f, représente un exemple d'interface graphique pour la consultation ou la saisie des informations relatives à un paramètre. Comme illustré sur la figure 3a, l'interface graphique 300 comprend des menus classiques 302, ici les menus Fichier, Edition, Vue, Document, Outils, Fenêtre et Aide, le nom 304 du paramètre édité ainsi qu'une vue sous forme d'onglets permettant d'accéder aux informations relatives au paramètre édité.

Les onglets concernent ici des informations relatives à l'identification (onglet 306), à l'enregistrement (onglet 322), à l'affichage (onglet 328), à certains détails (onglet 338), à la sécurité (onglet 352) et à la version (onglet 358). Il convient de noter que certaines de ces informations sont celles présentées précédemment.

L'onglet 306 concernant les informations générales d'identification comprend plusieurs champs éditables parmi lesquels,
- la catégorie 308 du paramètre dont la sélection peut être facilitée par un menu 310 déroulant et/ou de type *pop-up* présentant un choix de sélections possibles (ce mode de sélection étant connu de l'homme du métier, il n'y est pas fait systématiquement référence dans la suite de la description) ;
- le modèle 312 de l'aéronef concerné par le paramètre (la sélection de cette information peut également être facilitée par un menu déroulant et/ou de type *pop-up*) ;
- le chapitre ATA 314 concerné ;
- la version « passagers » ou « cargo » de l'aéronef concerné (non représenté) ;
- le type de moteur 316 de l'aéronef concerné (dans le cadre de l'édition de paramètre, il est ici possible de sélectionner plusieurs types de moteur dont la sélection peut être réalisée, par exemple, à l'aide de case à cocher) ;
- une identification paramètre moteur 318 indiquant s'il s'agit d'un paramètre moteur ou non ; et,
- la source 320, c'est-à-dire la référence du ou des dispositifs émetteurs à l'origine du paramètre édité.

De façon similaire, la figure 3b illustre un exemple d'interface graphique pour la consultation des informations liées à l'enregistrement du paramètre dans l'enregistreur de vol, regroupées sous l'onglet 322.

L'onglet 322 concernant les informations d'enregistrement comprend plusieurs champs parmi lesquels,
- une information 324 d'ordre général indiquant si le paramètre est ou non enregistré dans l'enregistreur de vol et, le cas échéant, les conditions dans lesquelles il est enregistré (un menu de type *pop-up* peut être utilisé pour visualiser ces conditions, telles que les logiques et caractéristiques d'enregistrement ou un lien vers des fichiers ou des outils référencés contenant ces informations) ;
- une information 326 indiquant s'il s'agit d'un paramètre réglementaire ou documentaire ;
- une indication 326 liée à la confidentialité d'enregistrement du paramètre, c'est-à-dire s'il s'agit d'un paramètre identifié comme sensible dont l'enregistrement dans l'enregistreur de vol est soumis à conditions (par exemple des données de position ou de trajectoire sur des aéronefs militaires) ; et,
- d'autres informations pertinentes propre à l'enregistrement et relatives au type d'aéronef concerné et au système d'enregistrement installé.

La figure 3c représente une interface graphique pour consulter ou éditer les informations d'affichage du paramètre. Ces informations sont regroupées sous l'onglet 328.

L'onglet 328 concernant les informations d'affichage comprend plusieurs champs éditables parmi lesquels,
- une information 330 indiquant si le paramètre est affiché ou non et, le cas échéant, les conditions dans lesquelles il est affiché (un menu de type *pop-up* peut être utilisé pour visualiser ces conditions telles que les logiques d'affichages ou un lien vers des fichiers/outils référencés contenant ces informations) ;
- une indication 332 d'ordre général pour préciser si le paramètre est affiché dans le cockpit et/ou en cabine ; et,
- une indication 334 plus détaillée précisant sur quel écran ou quels écrans du système d'affichage du cockpit et/ou de la cabine le paramètre est affiché ou affichable. Cette indication peut être représentée sous forme d'un ou de plusieurs schémas représentant les écrans d'affichage du cockpit et de la cabine et d'un système de navigation permettant de naviguer entre les différentes pages de ces écrans afin d'atteindre la ou les pages sur lesquelles le paramètre est affiché ou affichable. Ces pages peuvent contenir un ou plusieurs champs complémentaires, fonction du paramètre concerné, pour permettre une description plus précise.

Le système de navigation peut comprendre des boutons 336 de navigation permettant l'ouverture de nouvelles fenêtres et facilitant la navigation jusqu'à l'information désirée ou de boutons d'agrandissement et de rétrécissement (zoom) pour une consultation plus aisée.

La figure 3d illustre un exemple d'interface graphique pour consulter ou éditer les informations détaillées concernant le paramètre. Ces détails sont regroupés sous l'onglet 338.

L'onglet 338 comprend ici plusieurs champs éditables parmi lesquels,
- une description 340 plus ou moins détaillée du paramètre ;
- le type 342 du paramètre (par exemple entier, réel, booléen ou chaîne de caractères) ;
- l'unité de valeur 344 pour les paramètres de mesure (par exemple Kg, m/s ou bar) ;
- l'indication de signe 346 pour les valeurs numériques du paramètre ;
- la résolution 348 du paramètre ainsi que la plage de valeur opérationnelle du paramètre (non représentée) ;
- la précision 350 du paramètre ;
- la description des états vrais et faux pour les paramètres de type booléens ; et,
- d'autres informations pertinentes suivant le paramètre concerné.

Les informations détaillées complémentaires peuvent être représentées sous forme d'une ou plusieurs pages et de schémas représentant les différents calculateurs récepteurs du paramètre ainsi que le détail du format et de la structure des données (par exemple la description détaillée du label ARINC429 incluant le détail des bits utilisés) et les conventions de signes utilisées.

La figure 3e illustre un exemple d'interface graphique pour consulter ou éditer les informations de sécurité liées au paramètre édité de l'onglet 352.

L'onglet 352 comprend ici plusieurs champs parmi lesquels,
- une indication du niveau de sécurité 354 du paramètre (le niveau de sécurité est par exemple choisi dans un menu de type *pop-up*) ; et,
- la liste 356 des opérations d'affichage, d'enregistrement, de transmission autorisées ainsi que l'indication de cryptage du paramètre.

L'onglet peut également contenir des informations complémentaires précisant par exemple s'il s'agit d'un paramètre propre aux essais en vol (EV) ou de maintenance.

Enfin, la figure 3f représente un exemple d'interface graphique pour présenter les données de version liées aux informations du paramètre. Ces données, regroupées sous l'onglet 358 ne sont ici pas éditables.

L'onglet 358 comprend ici une indication de la version courante 360 de la carte d'identification du paramètre ainsi qu'un tableau 362 résumant les modifications apportées à cette carte d'identification. Dans cet exemple, le nombre de ligne du tableau 362 correspond au nombre de modifications apportées à la carte d'identification. Chaque ligne comprend de préférence les informations suivantes,
- la version 364 de la carte d'identification modifiée ;
- la date 366 de la modification ;
- la référence 368 de l'onglet modifié ;
- une brève description 370 de la modification effectuée ; et,
- le nom 372 de l'auteur de la modification.

Les informations liées à une carte d'identification telles que présentées sur la figure 3 sont utilisées pour déterminer un code d'identification et l'ensemble d'informations caractéristiques du paramètre. Ces informations sont mémorisées sous forme de cartes d'identification dans une base de données permettant notamment d'effectuer des opérations de recherche, de tri et de sélection.

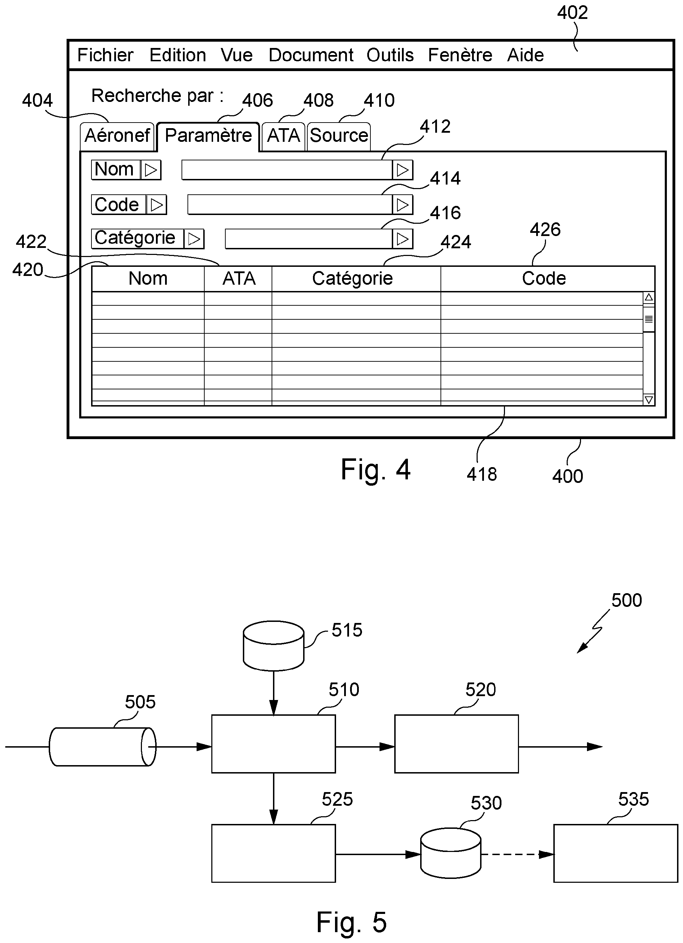

La figure 4 illustre un exemple d'interface graphique 400 permettant d'utiliser des fonctions de recherche et d'accès aux informations relatives aux paramètres avioniques. L'interface graphique 400 comprend ici un menu 402 standard, similaire au menu 302.

La recherche des informations relatives à un paramètre peut être effectuée selon plusieurs critères. Dans cet exemple, les critères principaux de recherche sont regroupés sous forme d'onglets. L'onglet 404 correspondant à une recherche par aéronef, l'onglet 406 correspond à une recherche par paramètre, l'onglet 408 correspond à une recherche par référence ATA et l'onglet 410 correspond à une recherche par équipement à l'origine des paramètres. L'exemple présenté sur la figure 4 illustre une recherche par paramètre.

L'onglet 406 comprend les champs 412, 414 et 416 permettant de définir les critères de recherche et un tableau 418 présentant une synthèse des résultats. Les champs 412, 414 et 416 de recherche permettent de déterminer la nature des informations sur lesquelles doit être effectuée la recherche ainsi que les valeurs de recherche. Ces choix sont de préférence entrés à l'aide de menus déroulants et/ou de type *pop-up.* Dans l'exemple illustré, les recherches sont effectuées à l'aide du nom du paramètre (champ 412), du code du paramètre (champ 414) et/ou de la catégorie (champ 416).

Le résultat de la recherche est de préférence affiché sous forme d'un tableau 418 dans lequel chaque ligne correspond à un résultat. Chaque résultat comprend ici le nom 420, la référence ATA 422, la catégorie 424 et le code d'identification 426 du paramètre. La fenêtre d'affichage des résultats est de préférence paramétrable par l'utilisateur selon ses besoins.

Pour protéger les données contenues dans les cartes d'identification des paramètres, un système de contrôle est avantageusement mis en oeuvre par la base de données lors de l'accès à ces données. Un tel contrôle consiste, par exemple, à contrôler les droits du demandeur tel que généralement utilisé par les bases de données.

De plus, comme indiqué précédemment, l'utilisation d'un code d'identification tel que défini par référence à la figure 2 permet de vérifier certaines informations relatives au paramètre, notamment la provenance ou le niveau de confidentialité de la valeur du paramètre. Une première vérification est effectuée par le dispositif recevant ces données tandis qu'une seconde vérification est effectuée par un dispositif de surveillance.

La figure 5 illustre un exemple du dispositif 500 utilisé pour vérifier les valeurs associées à un paramètre à l'aide du code d'identification du paramètre. Lorsqu'une trame 505 contenant une ou plusieurs valeurs ainsi qu'un code d'identification 200 est reçue par le dispositif 500 via un réseau (non représenté), le module 510 identifie les champs de la trame 505 selon le format et les références utilisés, mémorisés dans les moyens de mémorisation 515. Le module 510 comprend avantageusement des moyens d'analyse syntaxique (aussi appelés *parser* dans la terminologie anglo-saxonne). Les moyens de mémorisation 515 peuvent être locaux, c'est-à-dire appartenir au dispositif 500, ou déportés et accessibles via le réseau, par exemple liés à la base de données des cartes d'identification des paramètres. Les moyens de mémorisation 515 comprennent une description du codage des codes d'identification.

Chaque champ identifié dans la trame 505 est analysé et la cohérence des données est vérifiée selon le format et les références mémorisés en 515. A titre d'illustration, la cohérence des données peut être réalisée en comparant la nature du paramètre ou la référence ATA correspondante avec la source du paramètre. Ainsi, un paramètre d'air conditionné issu d'un calculateur de navigation serait considéré comme incohérent.

Il convient de rappeler ici que certaines données peuvent être encryptées. Avantageusement, le dispositif 500 ne peut décrypter ces données que s'il y est autorisé, c'est-à-dire s'il dispose de la clé de décryptage correspondante.

Si les données sont cohérentes et si le dispositif 500 a le droit de les utiliser, c'est-à-dire si le module 510 est en mesure de décrypter les données cryptées, les informations issues des champs de la trame 505 sont transmises au module 520 pour être utilisées. Le module 520 peut être, par exemple, un module d'affichage, un module de calcul ou un module utilisé à des fins statistiques.

Si les données ne sont pas cohérentes ou si le dispositif 500 n'a pas le droit de les utiliser, la trame 505 n'est pas transmise au module 520. La trame 505 est également effacée du module 510 si elle y a été stockée.

Parallèlement, un module de surveillance 525 contrôle l'analyse effectuée par le module 510 sur la trame 505 et transmet une indication de ce contrôle aux moyens de mémorisation 530. Le contrôle a notamment pour objet de déterminer le statut de l'analyse de la trame 505 et de transmettre des informations relatives à l'identité du paramètre concerné par la trame 505, à la cohérence des données et aux droits du module 510 de décrypter ces données.

Les informations mémorisées en 530 sont analysées par un module de contrôle de sécurité 535 qui effectue notamment une analyse statistique de ces données pour permettre d'identifier des failles de sécurité de réseau, des tentatives d'accès non justifiées à certains paramètres et plus généralement de contrôler la fiabilité, en terme de sécurité, du réseau sur lequel transitent les cartes d'identification des paramètres. Le module de contrôle de sécurité 535 génère des alertes si un problème est détecté.

De façon complémentaire ou alternative, des alertes peuvent être générées par le module de surveillance 525.

De façon avantageuse, un seul module 535 est utilisé pour contrôler l'échange des cartes d'information des paramètres sur un réseau.

Naturellement, pour satisfaire des besoins spécifiques, une personne compétente dans le domaine de l'invention pourra appliquer des modifications dans la description précédente. En particulier, bien que l'invention ait été plus particulièrement présentée dans le domaine des aéronefs, il convient de noter que de façon plus générale celle-ci peut être mise en oeuvre dans le domaine des véhicules aérodynamiques tels que les astronefs et les bateaux.

## Revendications

1. Procédé de gestion d'au moins une caractéristique d'au moins un paramètre utilisé à bord d'un véhicule aérodynamique, ce procédé étant **caractérisé en ce qu'**il comprend les étapes suivantes,
- recevoir un identifiant (205, 210) dudit au moins un paramètre ;
- recevoir ladite au moins une caractéristique dudit au moins un paramètre ;
- formaliser ladite au moins une caractéristique dudit au moins un paramètre selon un format prédéterminé ; et,
- former un code d'identification (200) dudit au moins un paramètre comprenant ledit identifiant et ladite au moins une caractéristique.

2. Procédé selon la revendication 1 **caractérisé en ce qu'**il comprend en outre les étapes suivantes,
- réception d'au moins une information complémentaire descriptive dudit au moins un paramètre ; et,
- association de ladite au moins une information complémentaire descriptive audit code d'identification.

3. Procédé selon la revendication 1 ou la revendication 2 **caractérisé en ce que** ladite au moins une caractéristique dudit au moins un paramètre comprend des informations relatives à la source, à l'enregistrement, à l'affichage ou au niveau de confidentialité des valeurs dudit au moins un paramètre.

4. Procédé de traitement d'au moins une valeur d'au moins un paramètre utilisé à bord d'un véhicule aérodynamique, ce procédé étant **caractérisé en ce qu'**il comprend les étapes suivantes,
- réception d'un code d'identification dudit au moins un paramètre, ledit code d'identification étant formé selon le procédé de gestion de l'une quelconque des revendications précédentes ;
- réception de ladite au moins une valeur associée audit au moins un paramètre ;
- vérification (510) des données dudit code d'identification reçu selon des données de référence prédéterminées ; et,
- si les données dudit code d'identification reçu sont vérifiées, traitement (520) de la dite au moins une valeur reçue.

5. Procédé selon la revendication 4 **caractérisé en ce qu'**il comprend en outre une étape de transmission (525) d'une information relative audit au moins un paramètre si les données dudit code d'identification reçu ne sont pas vérifiées.

6. Procédé de contrôle d'au moins un paramètre utilisé à bord d'un véhicule aérodynamique, ce procédé étant **caractérisé en ce qu'**il comprend les étapes suivantes,
- réception d'au moins une information relative audit au moins un paramètre, ladite information étant transmise par le procédé de traitement d'au moins une valeur dudit au moins un paramètre selon la revendication précédente ; et,
- génération d'une alerte (535).

7. Dispositif comprenant des moyens adaptés à la mise en oeuvre de chacune des étapes du procédé selon l'une quelconque des revendications précédentes.

8. Dispositif selon la revendication 7, ledit dispositif étant intégré à un aéronef.

9. Programme d'ordinateur comprenant des instructions adaptées à la mise en oeuvre de chacune des étapes du procédé selon l'une quelconque des revendications 1 à 6.

10. Moyen de stockage d'informations, amovible ou non, partiellement ou totalement lisible par un ordinateur ou un microprocesseur comportant des instructions de code d'un programme d'ordinateur pour l'exécution de chacune des étapes du procédé selon l'une quelconque des revendications 1 à 6.

## Patentansprüche

1. Verfahren zur Verwaltung mindestens eines Merkmals mindestens eines an Bord eines aerodynamischen Fahrzeugs verwendeten Parameters, wobei dieses Verfahren **dadurch gekennzeichnet ist, dass** es die folgenden Schritte umfasst:
- Erhalt eines Identifikators (205, 210) des mindestens einen Parameters;
- Erhalt des mindestens einen Merkmals des mindestens einen Parameters;
- Formatierung des mindestens einen Merkmals des mindestens einen Parameters nach einem vorbestimmten Format; und
- Bildung eines Identifizierungscodes (200) des mindestens einen Parameters, umfassend den Identifikator und das mindestens eine Merkmal.

2. Verfahren nach Anspruch 1, **dadurch gekennzeichnet, dass** es ferner die folgenden Schritte umfasst:
- Erhalt mindestens einer ergänzenden Information, die den mindestens einen Parameter beschreibt; und
- Zuordnung der mindestens einen ergänzenden beschreibenden Information zu dem Identifizierungscode.

3. Verfahren nach Anspruch 1 oder Anspruch 2, **dadurch gekennzeichnet, dass** das mindestens eine Merkmal des mindestens einen Parameters Informationen zur Quelle, Registrierung, Anzeige oder Vertraulichkeit der Werte des mindestens einen Parameters umfasst.

4. Verfahren zur Bearbeitung mindestens eines Werts mindestens eines an Bord eines aerodynamischen Fahrzeugs verwendeten Parameters, wobei dieses Verfahren **dadurch gekennzeichnet ist, dass** es die folgenden Schritte umfasst:
- Erhalt eines Identifikationscodes des mindestens einen Parameters, wobei der Identifikationscode nach dem Verfahren zur Verwaltung nach einem der vorhergehenden Ansprüche gebildet wird;
- Erhalt des mindestens einen, dem mindestens einen Parameter zugeordneten Werts;
- Überprüfung (510) der Daten des erhaltenen Identifikationscodes nach den vorbestimmten Referenzdaten; und
- wenn die Daten des erhaltenen Identifikationscodes überprüft sind, Bearbeitung (520) des mindestens einen erhaltenen Werts.

5. Verfahren nach Anspruch 4, **dadurch gekennzeichnet, dass** es ferner einen Schritt der Übertragung (525) einer Information zu dem mindestens einen Parameter umfasst, wenn die Daten des erhaltenen Identifikationscodes nicht überprüft sind.

6. Verfahren zur Kontrolle mindestens eines an Bord eines aerodynamischen Fahrzeugs verwendeten Parameters, wobei dieses Verfahren **dadurch gekennzeichnet ist, dass** es die folgenden Schritte umfasst:
- Erhalt mindestens einer Information zu dem mindestens einen Parameter, wobei die Information durch das Verfahren zur Bearbeitung mindestens eines Werts des mindestens einen Parameters nach dem vorhergehenden Anspruch übertragen wird; und
- Erzeugung eines Alarms (535).

7. Vorrichtung, umfassend Mittel, die für den Einsatz jedes der Schritte des Verfahrens nach einem der vorhergehenden Ansprüche angepasst sind.

8. Vorrichtung nach Anspruch 7, wobei die Vorrichtung in ein Flugzeug integriert ist.

9. Computerprogramm, umfassend Befehle, die an den Einsatz jedes der Schritte des Verfahrens nach einem der Ansprüche 1 bis 6 angepasst sind.

10. Mittel zur Speicherung von Informationen, das abnehmbar ist oder nicht, das teilweise oder zur Gänze von einem Computer oder Mikroprozessor lesbar ist, umfassend Computerprogrammcodebefehle für die Ausführung jedes der Schritte des Verfahrens nach einem der Ansprüche 1 bis 6.

## Claims

1. A method for management of at least one characteristic of at least one parameter used on board an aerodynamic vehicle, this method being **characterized in that** it comprises the following steps:
- receiving an identifier (205, 210) of said at least one parameter;
- receiving said at least one characteristic of said at least one parameter;
- formulating said at least one characteristic of said at least one parameter according to a predetermined format; and
- creating an identification code (200) of said at least one parameter comprising said identifier and said at least one characteristic.

2. The method according to claim 1, **characterized in that** it further comprises the following steps:
- receiving said at least one complementary information item descriptive of said at least one parameter; and
- associating said at least one complementary descriptive information item with said identification code.

3. The method according to claim 1 or claim 2, **characterized in that** said at least one characteristic of said at least one parameter comprises information items relating to the source, the recording, the display or the level of confidentiality of values of said at least one parameter.

4. A method for processing at least one value of at least one parameter used on board an aerodynamic vehicle, this method being **characterized in that** it comprises the following steps:
- receiving a code for identification of said at least one parameter, said identification code being created according to the management method of any one of the preceding claims;
- receiving said at least one value associated with said at least one parameter,
- verifying (510) the data of said identification code received according to predetermined reference data, and
- responsive to the data of said identification code received being verified, processing (520) said at least one value received.

5. The method according to claim 4, **characterized in that** it further comprises a step of transmitting (525) an information item relating to said at least one parameter responsive to the data of said identification code received not being verified.

6. A method for controlling at least one parameter used on board an aerodynamic vehicle, this method being **characterized in that** it comprises the following steps:
- receiving at least one information item relating to said at least one parameter, said information item being transmitted by the method for processing at least one value of said at least one parameter according to the preceding claim; and
- generating an alarm (535).

7. A device comprising means designed to implement each of the steps of the method according to any one of the preceding claims.

8. The device according to claim 7, said device being integrated into an aircraft.

9. Computer program comprising instructions adapted for implementing each of the steps of the method according to any one of Claims 1 to 6.

10. Removable or non-removable information storage means, partially or totally readable by a computer or a microprocessor comprising code instructions of a computer program for the execution of each of the steps of the method according to any one of Claims 1 to 6.
